# EUROPEAN PATENT SPECIFICATION

(11) **EP 0 516 058 B1**
(45) Date of publication and mention of the grant of the patent: **18.09.1996**
(21) Application number: 92108870.4
(22) Date of filing: 26.05.1992
(51) Int. Cl.: H04N 7/087, H04N 7/10

(54) **Multiplex transmission system**
Multiplexübertragungssystem
Système de transmission multiplexé

(30) Priority: 28.05.1991 JP 123653/91
(43) Date of publication of application: 02.12.1992
(73) Proprietor: MATSUSHITA ELECTRIC INDUSTRIAL CO., LTD., Kadoma-shi, Osaka-fu, 571 (JP)
(72) Inventor: Shimizu, Masaaki, Tokyo (JP); Kawano, Takashi, Kohoku-ku, Yokohama-shi (JP); Yoshida, Yasutaka, Yokohama-shi (JP); Takenaga, Yuichi, Yokohama-shi (JP)
(74) Representative: Patentanwälte Leinweber & Zimmermann

(56) References cited:
- EP-A- 0 271 969
- EP-A- 0 420 289
- DE-A- 1 960 493
- FR-A- 1 557 116
- US-A- 4 318 131

## Description

### BACKGROUND OF THE INVENTION

### 1. Field of the Invention

The present invention relates to a multiplex transmission system and an apparatus therefor for transmitting multiplexed signals including a video signal, a control signal, a power supply, etc.

### 2. Description of the Prior Art

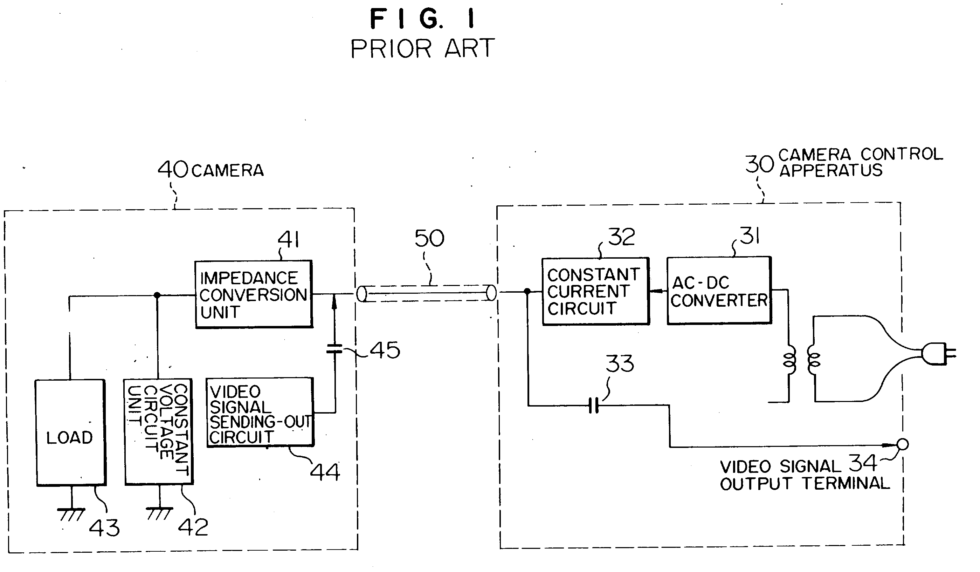

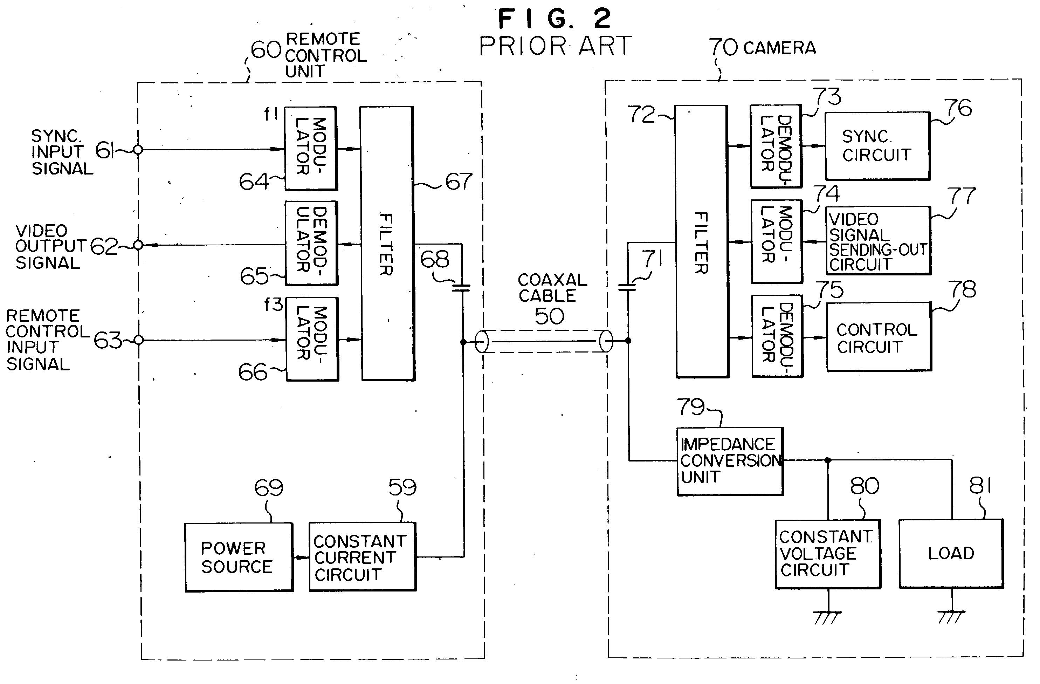

Conventionally, in order to multiplex a video signal and a power source, a transmission system (apparatus) as disclosed in Japanese Utility Model Publication JP-U-593606 (1984) has been often used in which a video signal and power source are only superposed and transmitted. In order to multiplex another control signal and the video signal, a transmission system (apparatus) has been used in which these signals are modulated by signals at different frequencies, respectively, and thereafter they are multiplexed to be transmitted. These multiplex transmission systems will be explained below with reference to Figs. 1 and 2.

Fig. 1 is a block diagram of the multiplex transmission system for multiplexing a video signal and power source to be transmitted. In Fig. 1, reference numeral 30 denotes a camera control device for taking out a video signal from a camera 40 located at a remote position and supplying power to the camera 40. Reference numeral 50 denotes a coaxial cable for connecting the camera control device 30 and the camera 40 with each other. The camera control device 30 includes an AC-DC converter 31 for converting a commercial power source into a DC power source to be used in the camera control device 30, and a constant current circuit 32 for regulating or stabilizing the output from the AC-DC converter 31. The camera 40 includes an impedance conversion unit 41 for converting a high impedance into a low impedance signal, and a constant voltage circuit unit 42 for regulating or stabilizing the voltage on the output side of the impedance conversion unit 41.

An explanation will be given of the operation of the prior art of Fig. 1 in which a power source is transmitted from the camera control device 30 to the camera 40 while a video signal is transmitted from the camera 40 to the camera control device 30. First, with respect to transmission of a power source, the AC-DC converter converts a commercial AC power source into a DC power source which is used within the camera control device 30 and also sends the DC power source to the constant current circuit 32. The constant current circuit 32 regulates the sent power source to a constant current which is supplied to the camera 40 through the coaxial cable 50. On the side of the camera 40, the impedance conversion unit 41 converts the sent signal into a high impedance voltage source. The constant voltage unit 42 regulates the voltage source to a constant voltage which is supplied to load 43 within the camera 43. On the other hand, with respect to transmission of a video signal, a video signal transmission circuit 44 in the camera 40 sends out a video signal to the coaxial cable 50 through a coupling capacitor 45. The video signal transmitted to the camera control device 30 through the coaxial cable 50 is transferred to a video signal output terminal 34 through a coupling capacitor 33.

In this case, the video signal is sent out, in a base band as it is without being modulated, from the camera 40, and transmitted to the camera control device 30 through the coaxial cable 50. The power source regulated by the camera control device 30 is also transmitted as it is to the side of camera 40 through the coaxial cable 50.

Fig. 2 is a block diagram of a multiplex transmission system in which a video signal and plural signals other than the video signal are multiplexed to be transmitted.

In Fig. 2, reference numeral 60 denotes a remote control unit, and reference numeral 70 denotes a camera connected with the remote control unit 60 through a coaxial cable 50. In the remote control unit 60 and the camera 70, reference numerals 64, 66 and 74 denote modulators for modulating input signals at different predetermined frequencies; reference numerals 65, 73 and 75 each denotes a demodulator for demodulating the modulated signal into the corresponding original signal; reference numerals 67 and 72 each denotes a filter for removing or suppressing the harmonic at frequencies other than a predetermined frequency and extracting only a predetermined frequency from the signal transmitted through the coaxial cable 50; reference numeral 59 denotes a constant current circuit for regulating or stabilizing a DC power source into a constant current; reference 79 denotes an impedance conversion unit for converting a DC constant current source into the power with low impedance; reference numeral 80 denotes a constant voltage circuit unit for regulating a DC power source to a stabilized constant voltage; reference numeral 76 denotes a synchronizing circuit for producing a sync signal for taking synchronization in the camera 70; reference numeral 77 denotes a video signal sending-out circuit for amplifying a video signal obtained on the side of the camera to be sent out; and reference numeral 78 denotes a control circuit for making several kinds of control within the camera 70.

With respect to the prior art of Fig. 2, an explanation will be given of the operations of transmitting a sync signal, a remote control signal, a video signal and a power source, respectively. A sync input signal and a remote control signal applied to terminals 61 and 63 are modulated at predetermined frequencies f1 and f3 by the modulators 64 and 66, respectively; the modulated signals are applied to the filter 67. When these multiplexed signals are transmitted to the side of the camera 70 through the coaxial cable 50, their frequency components of the frequencies f1 and f2 are extracted so that the resultant signals are applied to the demodulators 73 and 75. Thus, the original sync signal and remote control signal are demodulated by the demodulators 73 and 75 the outputs from which are sent to a sync circuit 76 and a control circuit 78.

On the other hand, a video signal which is created by the side of the camera 70 is modulated at a predetermined frequency f2 by the modulator 74. The modulated signal is applied to the filter 72 and sent out to the coaxial cable 50 through a capacitor 71. The video signal transmitted to the side of the remote control unit 60 through the coaxial cable 50 is applied to the demodulator 65; the video signal demodulated into the original video signal is outputted from a terminal 62.

Further, the power source is applied from a power source unit 69 to the coaxial cable 50 through the constant current circuit 59. On the side of the camera, it is converted into the power with low impedance by the impedance conversion unit 79 and further stabilized to a constant voltage by the constant voltage circuit unit 80. The constant voltage is applied to a load 81.

As described above, in the case of the prior art of Fig. 2, after the sync signal, the video signal, and the remote control signal are once modulated in the transmission source, these signals are multiplexed to transmit to a transmission destination and demodulated there to extract the original signals.

The above prior art multiplex transmission apparatuses suffer from the following defects. Where a video signal is transmitted in its base band as in the prior art of Fig. 1, the signals, e.g. a sync signal, other than a power source cannot be transmitted in the same base band simultaneously. On the other hand, where a sync signal, a video signal and a remote control signal are once modulated for their transmission, these signals must be demodulated again at a transmission destination. In this case, particularly, the video signal, because its modulation and demodulation, may have S/N, a differential gain characteristic (referred to as DG characteristic) and differential phase characteristic (referred to as DP characteristic) which are deteriorated as compared with the video signal before the modulation; thus the video signal cannot be reproduced in its accurate original form. Even if the signals are modulated at different frequencies and made sufficiently apart from one another by a filter, a remote control signal, for example, plunges into the video period of the video signal. As a result, the video signal will be adversely affected by e.g. beats.

### SUMMARY OF THE INVENTION

The present invention intends to solve the problems involved with the prior arts described above.

An object of the present invention is to provide a multiplex transmission system and an apparatus therefor which can prevent a S/N, DG characteristic and DP characteristic from being deteriorated and other signals from plunging into the video period of a video signal.

In order to attain the above object, in accordance with the present invention, signals such as a remote control signal and a sync signal other than a video signal are modulated at the frequencies outside the band of the video signal, and the modulated signals are multiplexed for their transmission in such a way that they are multiplexed in synchronism with the blanking period of the video signal.

Thus, in accordance with the present invention, a video signal can be transmitted in its base band, and hence the deterioration of the S/N, DG characteristic and DP characteristic during modulation/demodulation can be prevented.

Further, in accordance with the present invention, modulated signals are superposed on the blanking period of a video signal so that the signals other than the video signal will not plunge into the video period of the video signal and also the video signal will not be affected by e.g. beats.

EP-A-0 420 289 discloses a multiplex transmission apparatus in which a baseband video signal is transmitted through a coaxial cable, multiplexed with a control signal and a synchronizing signal. The control signal and the synchronizing signal are transmitted during a vertical blank period of the video signal. The multiplexing is, therefore, a time-multiplexing.

FR-A-1,557,116 discloses a multiplex transmission apparatus, in which a baseband video signal is transmitted together with a control signal through a single cable, by multiplexing. Said multiplexing is performed by modulating the control signal to have a frequency outside the baseband of the video signal. In other words, the multiplexing is a frequency-multiplexing.

An object of the present invention is to provide a multiplex transmission apparatus which can prevent a S/N, DG characteristic and DP characteristic from being deteriorated and other signals from plunging into the video period of a video signal.

According to the invention, the above object is achieved by a multiplex transmission apparatus comprising a first modulator for modulating a remote control signal at a first frequency; a second modulator for modulating a sync signal at a second frequency which is different from said first frequency; means for multiplexing the outputs from said first and second modulators and a video signal to provide a composite signal; in which composite signal said output from said first modulator is situated in the vertical blanking period of said video signal; and means for transmitting said composite signal, wherein said first and said second frequency are selected frequencies outside the baseband of the video signal.

In the composite signal, the output from the second modulator may be situated in the vertical blanking period of the video signal. Thereby, both the (modulated) control signal and the (modulated) sync signal are situated in the vertical blanking period of the video signal.

The transmitting means may be a coaxial cable.

Preferably, the outputs from said first and said second modulators are applied to a filter having passbands of said first and said second frequencies, and the output from said filter and the video signal are multiplexed.

Furthermore, there may be provided a filter extracting the components corresponding to said first and said second frequencies from the composite signal and first and second demodulating means for demodulating said first and said second frequency components extracted by said filter.

Further, a DC power source circuit may be provided, the output from which is multiplexed with the video signal to be transmitted.

Preferably, means are provided for regulating the output from the power source circuit to a constant current to be multiplexed with the video signal for its transmission.

### BRIEF DESCRIPTION OF THE DRAWINGS

Fig. 1 is a schematic block diagram of a prior art multiplex transmission system for transmitting a video signal and a power source;
Fig. 2 is a schematic block diagram of another prior art multiplex transmission system for transmitting a video signal, a sync signal, a remote control signal and a power source;
Fig. 3 is a schematic block diagram of the multiplex transmission system according to an embodiment of the present invention;
Fig. 4 is a view showing allotment of frequencies of different signals to be transmitted through a coaxial cable in the embodiment of the present invention;
Figs. 5A to 5C are waveform charts used for the multiplex transmission according to the embodiment of the present invention; and
Fig. 6 is a transmission waveform chart in the coaxial cable of the multiplex transmission system according to the embodiment of the present invention.

### DESCRIPTION OF THE PREFERRED EMBODIMENT

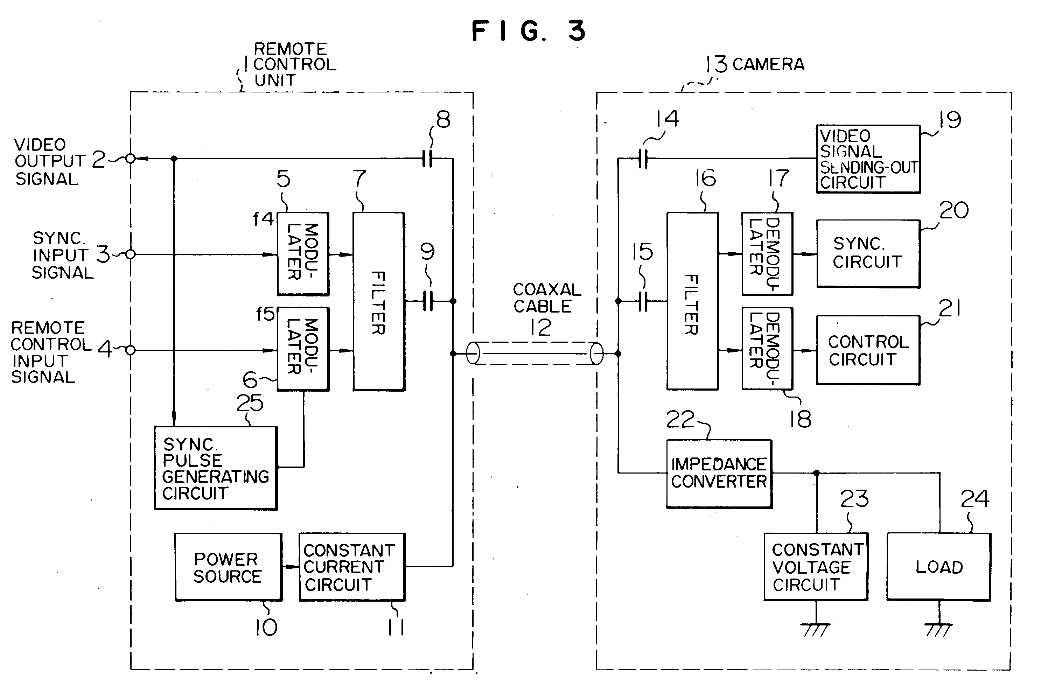

Fig. 3 is a block diagram showing the arrangement of an embodiment of the present invention. In Fig. 3, reference numeral 1 denotes a remote control unit for manipulating or controlling a camera 13 from a remote position; the remote control unit 1 is connected with the camera 13 through a coaxial cable 12. The remote control unit 1 is provided with terminals 2, 3 and 4 for inputting/outputting a video output signal, a sync input signal and a remote control signal, respectively.

In the remote control unit 1 and the camera 13, reference numerals 5 and 6 denote modulators for modulating input signals at predetermined frequencies, respectively; reference numerals 17 and 18 denote demodulators for demodulating the modulated signals into the signals at predetermined frequencies; reference numeral 7 denotes a filter for passing only the predetermined frequency components of the modulated signals; reference numeral 16 denotes a filter for extracting only the predetermined frequency components of the signals transmitted through the coaxial cable 12; reference numeral 11 denotes a constant current circuit for stabilizing or regulating a DC power source into a constant current source; reference numeral 22 denotes an impedance conversion unit for converting a DC constant current source into the power with low impedance; reference numeral 23 denotes a constant voltage circuit unit for regulating a DC power source to a stabilized constant voltage; reference numeral 19 denotes a video signal sending-out circuit for amplifying a video signal obtained on the side of the camera to be sent out; reference numeral 20 denotes a sync circuit for producing a sync signal for taking synchronization in the camera 13; and reference numeral 25 denotes a sync pulse generating circuit for generating pulses in synchronism with a video signal.

With respect to the embodiment of the present invention, an explanation will be given of the operations of transmitting a video signal, a sync signal, a remote control signal, and a power source, respectively. First, a video signal obtained on the side of the camera will be transmitted as follows. It is amplified by the video signal sending-out circuit 19. The amplified video signal is sent out to the coaxial cable 12 thorough a coupling capacitor 14. The video signal is sent to the remote control unit 1 through the coaxial cable 12. The video signal will be transmitted as it is in its base band.

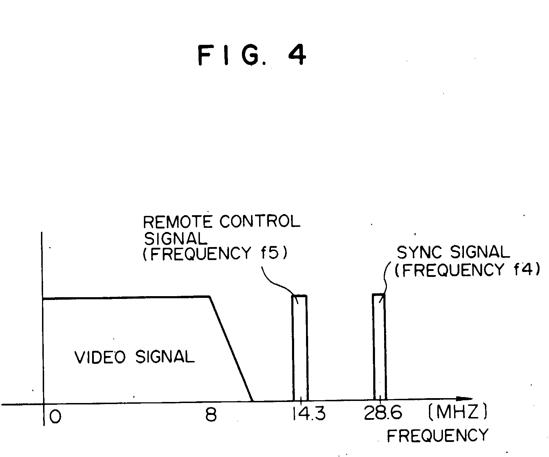

The sync input signal and the remote control signal will be transmitted as follows. The sync input signal and the remote control input signal applied to the input terminals 3 and 4 are modulated at predetermined different frequencies f4 and f5 by the modulators 5 and 6, respectively. Thereafter, the modulated signals passed through the filter 7 are sent out to the coaxial cable 12 through a coupling capacitor 9. The signals are applied to the filter 16 through a coupling capacitor 15; thus the signals are separated into individual signals. The signals are demodulated into the corresponding original signals by the modulators 17 and 18. Fig. 4 shows allotment of frequencies when the sync signal and the remote control signal are modulated. The video signal is located in its base band ranging from DC to 8 MHz. The sync signal is centered at 28. 6 MHz (frequency f4) and the remote control signal is centered at 14. 8 MHz (frequency f5). These frequencies are made sufficiently apart from one another in order to prevent interference among theses signals.

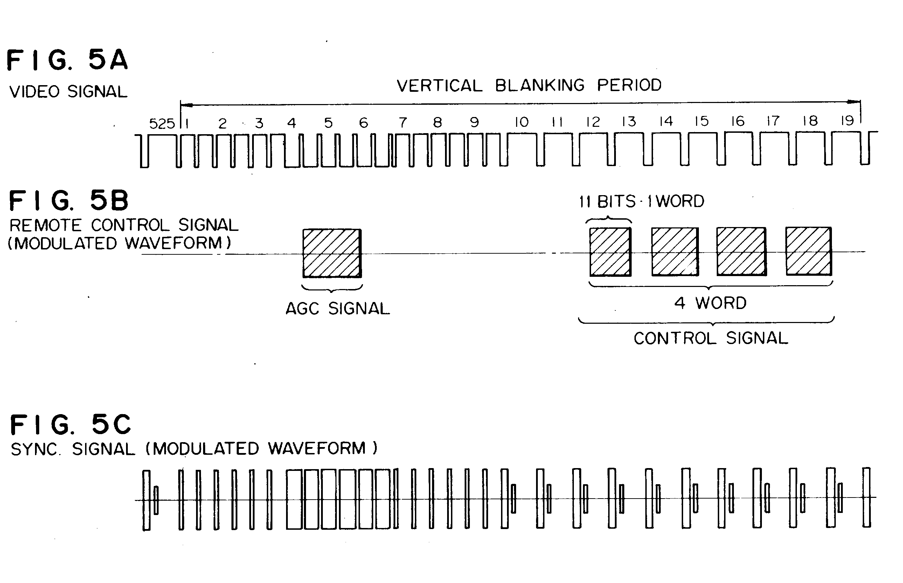

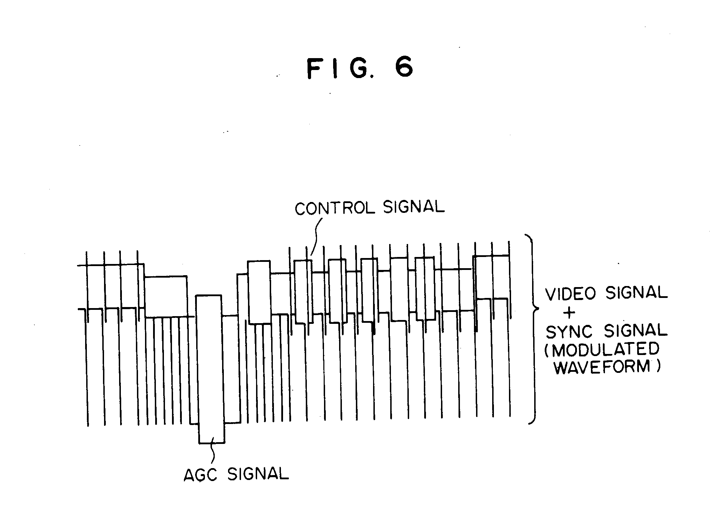

Now it should be noted that the remote control input signal is modulated by the modulator 6 in synchronism with the sync pulses generated by the sync signal generating circuit 25 so that the modulated signal is adapted to be located during the vertical blanking period of the video signal. Specifically, as shown in Figs. 5A and 5B showing the position relationship between the modulated remote control signal and the vertical blanking period of the video signal, the modulated remote control signal is present within about 20 H (1H refers to 64 µsec) of the vertical blanking period (Fig. 5A). Namely, with respect to the modulated remote control signal (Fig. 5B), an AGC (automatic gain control) signal which determines the amplifying gain, etc., of the video signal from a camera is located at 4.5-th H to 6-th H of the vertical blanking period, and a digital control signal (4 word instruction, one word composed of 11 bits) which informs the camera of the states of the remote control unit and the several kinds of keys is located at 12-th H to 18-th H thereof. Fig. 5C shows the waveform of the modulated sync signal. Fig. 6 shows the waveform resulting when these video signal, modulated remote control signal and modulated sync signal are multiplexed.

The power source will be transmitted as follows. A power source 10 on the side of the remote control unit 1 is applied to the coaxial cable 12 through the constant current circuit 11. On the side of the camera 13, it is converted into the power with low impedance by the impedance converter 22 and further regulated to a stabilized constant voltage by the constant voltage circuit 23. The constant voltage is applied to the load 24.

Thus, in accordance with the above embodiment, a video signal can be transmitted in its base band without being modulated and demodulated, and signals such as a sync signal and a remote control signal other than the video signal can also be modulated at different frequencies for their transmission. Hence, the video signal will not suffer from the deterioration of the S/N, DG characteristic and DP characteristic. Further, in accordance with the present invention, the modulated remote control signal is superposed on the blanking period of the video signal so that the remote control signal will not plunge into the video period of the video signal and also the video signal will not be affected by e.g. beats.

In this embodiment, only the remote control signal has been set in synchronism with the vertical blanking period. But if the sync signal is also set in the same way, the plunging of other signals into the video signal and the affection by beats can be further obviated.

Thus, as understood from the description of the above embodiment, in accordance with the present invention, a video signal can be transmitted as it is in its base band, and hence the deterioration of the S/N, DG characteristic and DP characteristic during modulation/demodulation can be prevented.

Further, in accordance with the present invention, a modulated signal(s) is synchronous with the video signal to be superposed on the blanking period of the video signal so that the signals other than the video signal will not plunge into the video period of the video signal and also the video signal will not be affected by beats.

## Claims

1. A multiplex transmission apparatus comprising:
a first modulator (6) for modulating a remote control signal at a first frequency (f5);
a second modulator (5) for modulating a sync signal at a second frequency (f4) which is different from said first frequency;
means (7, 8, 9) for multiplexing the outputs from said first and second modulators and a base band video signal to provide a composite signal; in which composite signal said output from said first modulator (6) is situated in the vertical blanking period of said video signal; and
means (12) for transmitting said composite signal,
wherein said first and said second frequency are selected frequencies outside the base band of the video signal.

2. The multiplex transmission apparatus according to claim 1, wherein, in said composite signal, said output from said second modulator (5) is situated in the vertical blanking period of said video signal.

3. The multiplex transmission apparatus according to claim 1 or 2, wherein said transmitting means is a coaxial cable (12).

4. The multiplex transmission apparatus according to any preceding claim, wherein the outputs from said first and said second modulators are applied to a filter (7) having passbands of said first and said second frequencies, and the output from said filter (7) and the video signal are multiplexed.

5. The multiplex transmission apparatus according to any preceding claim comprising:
a filter (16) extracting the components corresponding to said first and said second frequencies from said composite signal; and
first and second demodulating means (17, 18) for demodulating said first and second frequency components extracted by said filter.

6. The multiplex transmission apparatus according to any preceding claim, further comprising a DC power source circuit (10) the output from which is superimposed on said video signal to be transmitted.

7. The multiplex transmission apparatus according to claim 6, further comprising means (11) for regulating the output from said power source circuit (10) to a constant current to be superimposed on said video signal for its transmission.

## Patentansprüche

1. Multiplexübertragungsgerät mit:
einem ersten Modulator (6) zum Modulieren eines Fernsteuersignals bei einer ersten Frequenz (f5);
einem zweiten Modulator (5) zum Modulieren eines Sync-Signals bei einer sich von der ersten Frequenz unterscheidenden zweiten Frequenz (f4);
einer Einrichtung (7, 8, 9) zum Multiplexen der Ausgaben des ersten Modulators und des zweiten Modulators sowie eines Grundband-Videosignals zur Bereitstellung eines zusammengesetzten Signals, wobei die Ausgabe des ersten Modulators (6) in dem zusammengesetzten Signal in dem Vertikalaustastintervall des Videosignals angeordnet ist und
einer Einrichtung (12) zum Übertragen des zusammengesetzten Signals,
wobei die erste Frequenz und die zweite Frequenz außerhalb des Grundbandes des Videosignals gewählte Frequenzen sind.

2. Multiplexübertragungsgerät nach Anspruch 1, bei dem die Ausgabe des zweiten Modulators (5) in dem zusammengesetzten Signal in dem Vertikalaustastintervall des Videosignals angeordnet ist.

3. Multiplexübertragungsgerät nach Anspruch 1 oder 2, bei dem die Übertragungseinrichtung ein Koaxialkabel (12) ist.

4. Multiplexübertragungsgerät nach einem der vorhergehenden Ansprüche, bei dem die Ausgabe des ersten Modulators und die Ausgabe des zweiten Modulators an ein der ersten Frequenz und der zweiten Frequenz entsprechende Durchgangsbänder aufweisendes Filter (7) angelegt werden und die Ausgabe des Filters (7) sowie das Videosignal einem Multiplexverfahren unterzogen werden.

5. Multiplexübertragungsgerät nach einem der vorhergehenden Ansprüche mit:
einem Filter (16) zum Extrahieren der der ersten Frequenz und der zweiten Frequenz entsprechenden Komponenten aus dem zusammengesetzten Signal und
einer ersten Demodulationseinrichtung (17) und einer zweiten Demodulationseinrichtung (18) zum Demodulieren der mit dem Filter extrahierten ersten Frequenzkomponente und zweiten Frequenzkomponente.

6. Multiplexübertragungsgerät nach einem der vorhergehenden Ansprüche, das ferner eine DC-Leistungsversorgungsschaltung (10) aufweist, deren Ausgabe dem zu übertragenden Videosignal überlagert wird.

7. Multiplexübertragungsgerät nach Anspruch 6, das ferner eine Einrichtung (11) zum Regeln der Ausgabe der Leistungsversorgungsschaltung (10) auf einen konstanten Strom, der für seine Übertragung dem Videosignal zu überlagern ist, aufweist.

## Revendications

1. Appareil de transmission multiplex, comprenant:
un premier modulateur (6) pour moduler un signal de télécommande à une première fréquence (f5);
un second modulateur (5) pour moduler un signal de synchronisation à une seconde fréquence (f4) qui est différente de ladite première fréquence;
des moyens (7,8,9) pour multiplexer les signaux de sortie desdits premier et second modulateurs et un signal vidéo en bande de base et délivrer ainsi un signal composite, signal composite dans lequel ledit signal de sortie dudit premier modulateur (6) est situé dans la période de suppression de trame dudit signal vidéo; et
un moyen (12) pour transmettre ledit signal composite;
dans lequel ladite première fréquence et ladite seconde fréquence sont des fréquences sélectionnées en dehors de la bande de base du signal vidéo.

2. Appareil de transmission multiplex selon la revendication 1, dans lequel, dans ledit signal composite, ledit signal de sortie dudit second modulateur (5) est situé dans la période de suppression de trame dudit signal vidéo.

3. Appareil de transmission multiplex selon la revendication 1 ou 2, dans lequel ledit moyen de transmission est un câble coaxial (12).

4. Appareil de transmission multiplex selon l'une quelconque des revendications 1 à 3, dans lequel les signaux de sortie desdits premier et second modulateurs sont appliqués à un filtre (7) présentant des bandes passantes comprenant lesdites première et seconde fréquences, et le signal de sortie dudit filtre (7) et le signal vidéo sont multiplexés.

5. Appareil de transmission multiplex selon l'une quelconque des revendications 1 à 4, comprenant :
un filtre (16) qui extrait dudit signal composite les composantes correspondant auxdites première et seconde fréquences; et
des premier et second moyens démodulateurs (17,18) pour démoduler lesdites composantes correspondant aux première et seconde fréquences, extraites par ledit filtre.

6. Appareil de transmission multiplex selon l'une quelconque des revendications 1 à 5, comprenant en outre un circuit d'alimentation en courant continu (10), dont la sortie est superposée audit signal vidéo à transmettre.

7. Appareil de transmission multiplex selon la revendication 6, comprenant en outre un moyen (11) pour réguler la sortie dudit circuit d'alimentation (10) à un courant constant à superposer audit signal vidéo en vue de sa transmission.
